(19) Europäisches Patentamt / European Patent Office / Office européen des brevets

(11) **EP 3 658 750 B1**

(12) **EUROPEAN PATENT SPECIFICATION**

(45) Date of publication and mention
of the grant of the patent:
**23.11.2022 Bulletin 2022/47**

(21) Application number: **18837612.3**

(22) Date of filing: **26.07.2018**

(51) International Patent Classification (IPC):
*E21B 43/30* (2006.01)    *E21B 47/06* (2012.01)
*G01V 1/00* (2006.01)    *E21B 49/00* (2006.01)

(52) Cooperative Patent Classification (CPC):
**E21B 43/30; E21B 49/00; G01V 1/00; E21B 47/06**

(86) International application number:
**PCT/US2018/043932**

(87) International publication number:
**WO 2019/023480 (31.01.2019 Gazette 2019/05)**

(54) **DRAINED RESERVOIR VOLUME DIAGNOSTICS FROM MANDEL-CRYER PRESSURE SIGNAL**

VOLUMENDIAGNOSTIK EINES ENTLEERTEN BEHÄLTERS AUS EINEM MANDEL-CRYER-DRUCKSENSOR

DIAGNOSTIC DE VOLUME DE RÉSERVOIR DRAINÉ À PARTIR D'UN SIGNAL DE PRESSION DE MANDEL-CRYER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.07.2017 US 201762537150 P**

(43) Date of publication of application:
**03.06.2020 Bulletin 2020/23**

(73) Proprietor: **ConocoPhillips Company Houston, Texas 77079 (US)**

(72) Inventors:
• **AGRAWAL, Samarth**
  **Houston, Texas 77079 (US)**
• **ALBERT, Richard A.**
  **Houston, Texas 77079 (US)**

(74) Representative: **Simpson, Paul Christopher ConocoPhillips (U.K.) Limited
20th Floor
Angel Court
London EC2R 7HJ (GB)**

(56) References cited:
WO-A1-2009/094064    US-A1- 2005 073 910
US-A1- 2015 176 394    US-A1- 2016 237 799

• **Roussel Nicolas P. ET AL: "Introduction to Poroelastic Response Analysis - Quantifying Hydraulic Fracture Geometry and SRV Permeability from Offset-Well Pressure Data", Proceedings of the 5th Unconventional Resources Technology Conference, 24 July 2017 (2017-07-24), pages 1-13, XP055783281, Tulsa, OK, USA Retrieved from the Internet: URL:https://www.researchgate.net/publicati on/322349336_Introduction_to_Poroelastic_R esponse_Analysis_-_Quantifying_Hydraulic_F racture_Geometry_and_SRV_Permeability_from _Offset-Well_Pressure_Data [retrieved on 2021-03-09]**
• **YIN, S Dusseault, M.B. Rothenburg, M.: Assessment of the Noordbergum effect with the complete overburden reaction considered, January 2009 (2009-01), pages 1-8, XP055569124, Retrieved from the Internet: URL:https://www.researchgate.net/publicati on/289228513**

**Description**

**FIELD OF THE INVENTION**

The present invention relates generally to recovery of hydrocarbons from an unconventional reservoir. More particularly, but not by way of limitation, embodiments of the present invention include tools and methods for mapping poromechanic pressure changes in a subterranean formation which can be used to optimize a production strategy.

**BACKGROUND OF THE INVENTION**

Unconventional reservoirs (UR) typically require massive stimulation or special recovery processes in order to produce oil and gas at economically viable flow rates. Compared to conventional reservoirs, unconventional reservoirs are large in volume and difficult to develop. Examples of unconventional reservoirs include, but are not limited to, low permeability oil, tight gas sands, gas shales, heavy oil, coalbed methane, gas hydrates, and oil shales. WO2009/094064 discloses methods, computer-readable mediums, and systems to analyze hydrocarbon production data from a subsurface region to determine geologic time scale reservoir connectivity and production time scale reservoir connectivity for the subsurface region. Compartments, fluid properties, and fluid distribution are interpreted to determine geologic time scale reservoir connectivity and production time scale reservoir connectivity for the subsurface region. A reservoir connectivity model based on the geologic time scale and production time scale reservoir connectivity for the subsurface region is constructed, wherein the reservoir connectivity model includes a plurality of production scenarios each including reservoir compartments, connections, and connection properties for each scenario. Each of the production scenarios is tested and refined based on production data for the subsurface region.
Roussel Nicholas P. ET AL: "Introduction to Poroelastic Response Analysis - Quantifying Hydraulic Fracture Geometry and SRV Permeability from Offset-Well Pressure Data", Proceedings of the 5th Unconventional Resources Technology Conference, 24 July 2017 (2017-07-24), pages 1-13, proposes a far-field hydraulic fracture mapping technology using poroelastic responses measured by downhole/surface pressure gauges to track hydraulic fracture growth and calculate their height, length, orientation, and induced SRV permeability. Poroelastic responses (deformation-induced pressure changes) can be measured at great distances from hydraulic fracture (100s of meters), range from a 7-14kPa to over 7MPa, different from hydraulic responses (direct fluid communication).

**BRIEF SUMMARY OF THE DISCLOSURE**

The present invention relates generally to recovery of hydrocarbons from an unconventional reservoir. The invention provides methods of characterizing a hydrocarbon reservoir in a subterranean formation as defined in the claims. More particularly, but not by way of limitation, embodiments of the present invention include tools and methods for mapping poromechanic pressure changes in a subterranean formation which can be used to optimize a production strategy.
One method of obtaining hydrocarbon from a reservoir in a subterranean formation includes measuring a poromechanic pressure change due to lithostatic load sharing in the subterranean formation; mapping the poromechanic pressure change to one or more locations in the subterranean formation; identifying one or more local pressure peaks in the poromechanic pressure change, wherein the one or more local pressure peaks are each marked by a pressure escalation and subsequent pressure depletion; and determining one or more regions in the reservoir exhibiting single phase hydrocarbon production.

**BRIEF DESCRIPTION OF THE DRAWINGS**

A more complete understanding of the present invention and benefits thereof may be acquired by referring to the following description taken in conjunction with the accompanying drawings in which:

FIG. 1 illustrates pressure escalation and pressure depletion according to one or more embodiments of the present invention.
FIG. 2 illustrates pressure escalation and pressure depletion according to one or more embodiments of the present invention.
FIG. 3A illustrates a schematic showing a configuration of a production well (Producer) and multiple pressure gauges (Gauges X, Y, Z) according to one or more embodiments of the present invention. FIG. 3B summarizes pressure changes measured at the pressure gauges.
FIG. 4 illustrates a simulated graph as described in the Example.
FIG. 5 illustrates a simulated graph as described in the Example.

FIGS. 6A-6B illustrate simulated graphs as described in the Example.

## DETAILED DESCRIPTION

Reference will now be made in detail to embodiments of the invention, one or more examples of which are illustrated in the accompanying drawings.

Pressure depletion in a draining well can provide challenges to recovering hydrocarbons. Liquid dropout from the gas phase when reservoir pressure falls below saturation pressure should impair well productivity due to relative permeability effects. When pressure drops below the dew point, condensate forms a bank of fluid in the reservoir that can hamper deliverability. One would expect that when a reservoir is being drained, pore pressure will only go down from its initial value. However, this is not always true for all parts of a reservoir.

Some unconventional reservoir wells have reported delayed onset of multiphase effects as measured using changes in condensate gas ratio (CGR) in the surface-produced flow stream. This delay in CGR change can be attributed to pressure escalation/support due to the so-called Mandel-Cryer effect. Previously, Mandel and Cryer independently observed similar anomalous pressure escalation responses during a fluid drainage event. This pressure escalation may be analogous to reverse water fluctuations known as the Noordbergum effect, first observed by Dutch scientists. As one part of a water reservoir was drained, other parts experienced a pressure escalation observable as change in water levels due to overburden load sharing.

However, this pressure escalation was largely ignored in conventional highly permeable reservoirs since the effect was short lived and low in magnitude. However, this effect becomes greater when rocks have low permeability (nano Darcy to micro Darcy) as found in many unconventional reservoirs. This effect may be particularly accentuated when the rock is characterized by a low Young's modulus (less than about 172 GPa (2.5 MM psi), low Poisson's ratio (about 0.15 to 0.2), and low permeability (less than about 200 nD) 1psi = 6.9 kPa.

There are many potential commercial applications of the present invention. Being able to predict the expected delay in multiphase CGR onset can help asset engineers make more reliable reserves forecasts. For example, if the condensate yield starts declining after 2 years rather than 5 years, the net present value (NPV) of the well will be vastly different, when considering the price differential between gas and liquids. An engineer can also utilize this knowledge to design an optimal drawdown/choke operating strategy for unconventional reservoir wells in condensate areas where this phenomenon is anticipated. For exploration/appraisal leases, application of these concepts can help high-grade areas where this phenomena can be leveraged with given mechanical and flow properties of the reservoir rock. Moreover, the pressure signals depend on production-induced effects and are therefore a long term signal. This eliminates the risk of missing essential information such as in methods utilizing stimulation period data.

The invention provides systems and methods for utilizing coupled fluid flow and poromechanical physics to understand why the CGR of a produced fluid may show delayed multiphase onset in certain reservoirs but not others. In the past, advanced coupled flow and geomechanics physical concepts have often been deemed inapplicable in oil and gas reservoir modeling. While this is somewhat true in conventional reservoirs (high permeability), unconventional reservoirs can exhibit far different behavior, particularly when marked by ultra low permeability and low Young's modulus.

As described herein, the term "poromechanical" and its related terms refer to the branch of physics that deals with behavior of a fluid-saturated porous medium. The porous medium refers to a framework of solid material with some internal, voided pore space, connected or otherwise, that may contain fluid in liquid or gaseous form. Both the solid and the void space fluids have unique physical properties which often leads to counter-intuitive physical phenomena when exposed to external forces as a system rather than only solid or fluid.

The present invention can help estimate the magnitude of a pressure escalation and its duration due to load sharing from another part of the reservoir which is being drained. The period for which pressure stays above the initial reservoir pressure is essentially a time offset for the onset of regular multiphase effects to be expected in the absence of the Mandel-Cryer effect. The magnitude of pressure escalation dictates the absolute impact on hydrocarbon pressure-volume-temperature (PVT) and can also be used for drainage diagnostics. This allows one to prioritize plays and sweet spots where this effect could be leveraged to improve asset PV.

One of the goals of the present invention is to understand the poromechanical mechanisms that lead to delayed CGR changes. Without understanding the poromechanical physics, reservoir engineers would be forced to tweak history match models using non-physical values and are unable to make reliable production forecasts or design an optimal well operating strategy. Thus, one of the advantages of the present invention is that it allows reservoir engineers to design an optimal drawdown strategy which impacts well and fracture cleanup as well as ultimate resource recovery.

Without being limited by theory, it is believed that the delay in CGR trends observed in producing wells of unconventional reservoirs can be attributed to the Noordbergum/Mandel-Cryer or reverse-water-level effects. In soft poro-elastic rocks, pressure depletion in certain parts of a reservoir can lead to a pressure escalation in a non-drained region. This can be attributed to stress transfer and high-low permeability contrast between drained and undrained parts of a reservoir.

Based on these principles, simulation-based type curves can be used to estimate the magnitude and duration of pressure escalation in the reservoir due to any given applied wellbore drawdown. Type curves for different mechanical and flow property configurations are generated using stochastic coupled flow and geomechanics simulations of the well setup. This can help reservoir engineers make more reliable estimates of the reservoir pressure distribution and therefore of the expected fluid pressure, temperature, and volume (PVT) variations. If the pressure escalation provided by soft and low perm rock is high enough, the fluid will continue to stay in a single phase in the reservoir for an extended duration thereby providing a constant CGR response at the surface for a longer duration than expected.

It has been observed that pore pressure can escalate unexpectedly near certain UR producing wells. This pressure escalation in turn can lead to an extended period of constant CGR. This is similar to providing pressure support to producing wells in conventional reservoirs using mechanisms such as water or gas injection. However, rather than relying on hydraulic pressure support (possible in high permeability reservoirs), the pressure support in low permeability reservoirs should be poromechanic in nature, due to overburden load sharing.

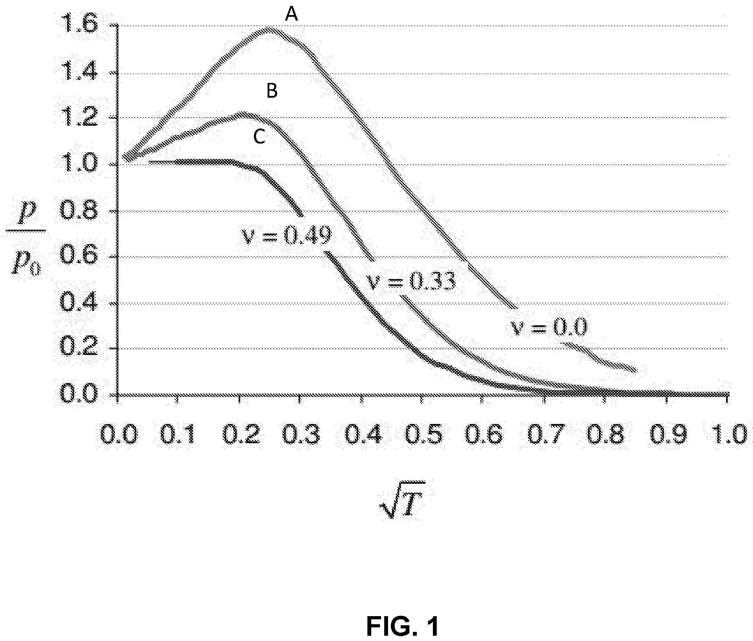

FIG. 1 illustrates a pressure escalation that can take place during fluid drainage in a low permeability, low Young's modulus environment. The three curves ("A", "B", and "C") correspond to the pore pressure variations in three different poromechanic property experimental setups. These curves can be described by the following relationship:

$$T = \frac{C_v t}{a^2} = \frac{E'k(1-v)t}{(1+v)(1-2v)\gamma_w a^2} \qquad (1)$$

where $T$ is dimensionless time, $C_v$ is coefficient of consolidation, $t$ is consolidation time, $k$ is coefficient of permeability, $a$ is drainage distance, $E'$ is Young's modulus of soil, $v$ is Poisson's ratio, $\gamma_w$ is unit weight of water. Equation (1) shows that lower Poisson Ratio, lower Young's Modulus, and lower permeability all lead to higher $t$ (i.e., duration of pressure escalation).

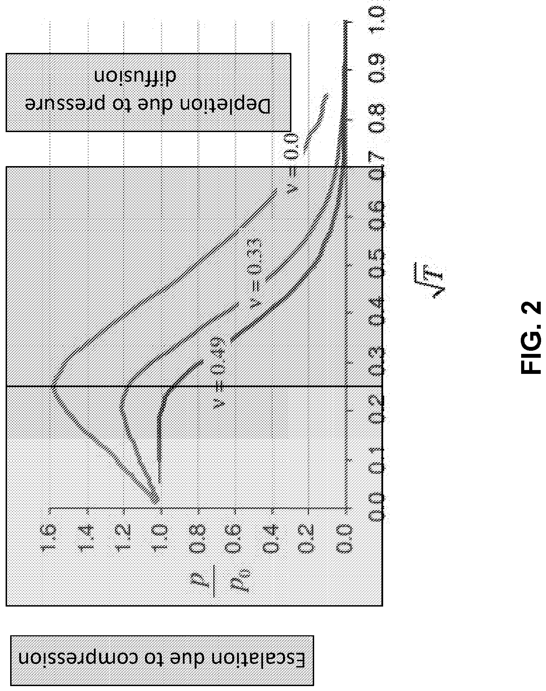

FIG. 2 divides the graph in FIG. 1 into a escalation stage (left) and a depletion stage (right). The pressure escalation is most pronounced in curve A followed by curve B. Curve C does not have the obvious local peak of curves A and B. Without being limited by theory, the pressure escalation is due to lithostatic load sharing. In other words, as fluid is drained in the producing well, other parts of the formation are required to take on more of the overburden load. Certain areas of the formation (e.g., adjacent and below to the drained reservoir volume) will take on greater portions of the load corresponding to higher pressure escalation peaks. This poromechanic effect takes a discernable amount of time to propagate throughout the reservoir.

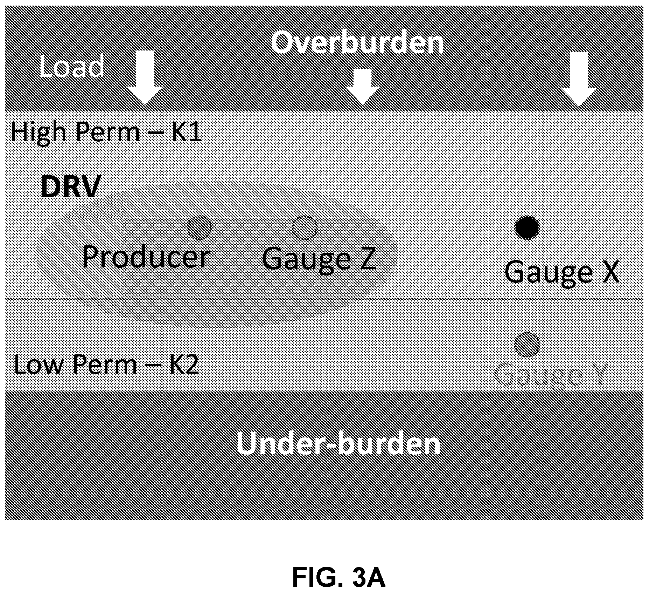

FIG. 3A is a schematic diagram representing the cross section of an unconventional reservoir with a producer well going into the plane in the reservoir target directly below the overburden. As shown, the reservoir includes a high permeability region (KI) and a lower permeability region (K2). Also shown, is the producing well (producer) and pressure gauges X, Y, and Z.

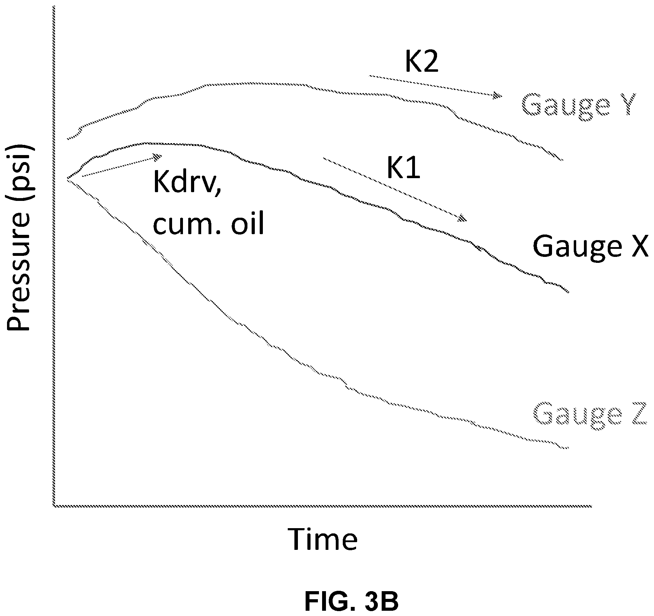

In one embodiment, gauges X, Y, and Z are installed in separate offset wells. They may also be located in different sections of a single well or combination of vertical and horizontal wells or combination of producing (active) and monitoring (passive) wells. Gauge Z is located closest to the producing well, followed by gauge X and then gauge Y. After stimulation and production from the reservoir through the producer well, pressure measurements were taken in each offset location X, Y, Z. FIG. 3B shows the measured pore pressure as a function of time. In comparing the three pressure gauge measurements, readings from gauge Y show the largest pressure escalation. This is due, at least partly, to gauge Y being located in a lower permeability region (which prevents pressure from dissipating quickly) and being subjected comparatively to the most lithostatic pressure from above.

Gauge X experiences the second largest pressure escalation. The pressure escalation in gauge X is lower than the escalation in gauge Y for a number of reasons. First, gauge X resides in a higher permeability region as opposed to a low permeability region which prevents excessive pressure build-up by allowing it to dissipate more quickly. Since gauge X is installed closer to the surface, it experiences lower lithostatic pressure as compared to gauge Y.

Out of the three, gauge Z experiences the smallest pressure escalation. Gauge Z resides in the stimulated, high effective permeability region of the reservoir and within a drained reservoir volume (DRV). As such, the present invention can provide type curves for quick estimation of pressure escalation at each gauge location for given mechanical, flow and drawdown conditions. Moreover, the amplitude and duration of the measured pressure escalation can be utilized in inverse models to estimate effective drainage volume and permeability. Since pressure escalation only takes place in the undrained part of the reservoir, a pressure escalation in, for example, an offset well (higher than initial pressure) indicates the depletion extent (DRV) is less than the distance to offset well. This may be the only way of estimating the "effective" producing drainage volume (i.e., DRV extent in an unconventional reservoir). The rate of pressure escalation is indicative of the rate of hydrocarbon depletion, the DRV effective permeability, and the DRV effective Young's modulus. A pressure decrease is indicative of the matrix permeability adjacent to the monitoring location.

As described herein, the term "drained reservoir volume" refers to the portion of the total reservoir that is contacted by or adjacent to hydraulic fracture stimulation from a well and therefore experiences hydrocarbon drainage and pressure depletion with time. Knowledge of the drained reservoir volume helps assess well stacking-spacing distance and reserves estimation.

The present invention can assist in designing an optimal drawdown strategy to maximize well and asset level PV. One can design well completion or operating strategies (e.g., choke setting, number of induced fractures, number of fracture clusters, choice of stimulation fluid, and/or choice of proppant type) in order to accelerate hydrocarbon recovery, thereby influencing the pressure escalation duration and magnitude. Estimation of DRV dimensions is also extremely important for understanding optimal well spacing in the reservoir. This can help companies improve recovery factors.

Knowledge of when and how much the fluid CGR can change due to a poromechanical pressure escalation caused by adjacent well's drainage can assist in improving well productivity forecasts. The engineer can estimate when to expect a multiphase productivity drop and can plan for an appropriate artificial lift solution. Whether a well is within or outside the DRV of another producing well can also help the engineer estimate appropriate spacing-related performance degradation and loss of productivity due to well interference.

## EXAMPLE

This example describes coupled fluid flow and poromechanic simulation results that illustrate how various physical parameters can impact the evolution of pore pressure at a given subsurface location away from fluid drainage.

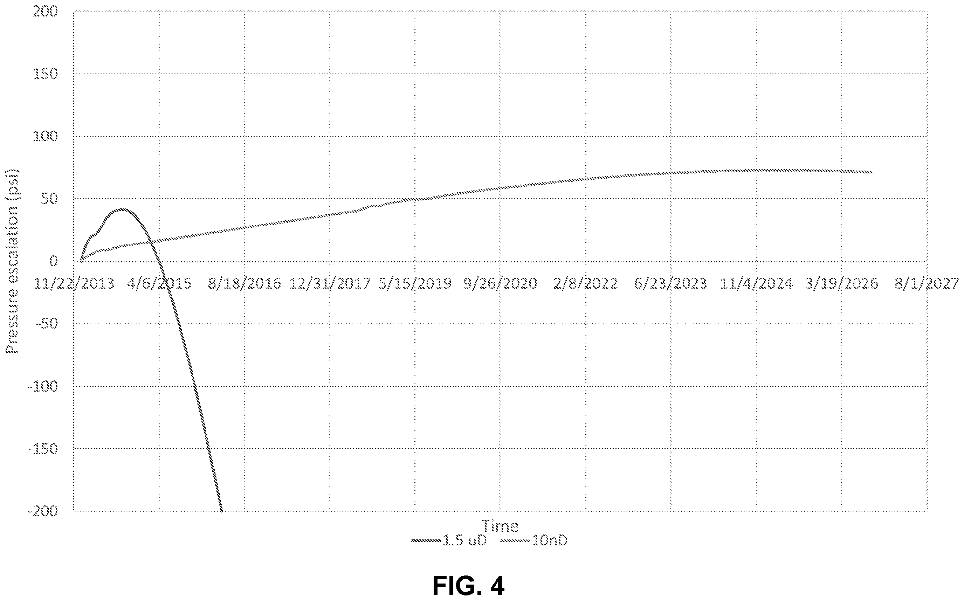

FIG. 4 shows how permeability can impact pressure. Referring to FIG. 4, one curve (1.5 $\mu$D) corresponding to relatively higher permeability shows a pressure escalation lasting about one year and then undergoing pressure depletion. The second curve (10 nD) corresponding to relatively lower permeability shows a more gradual pressure escalation that can last a decade or so.

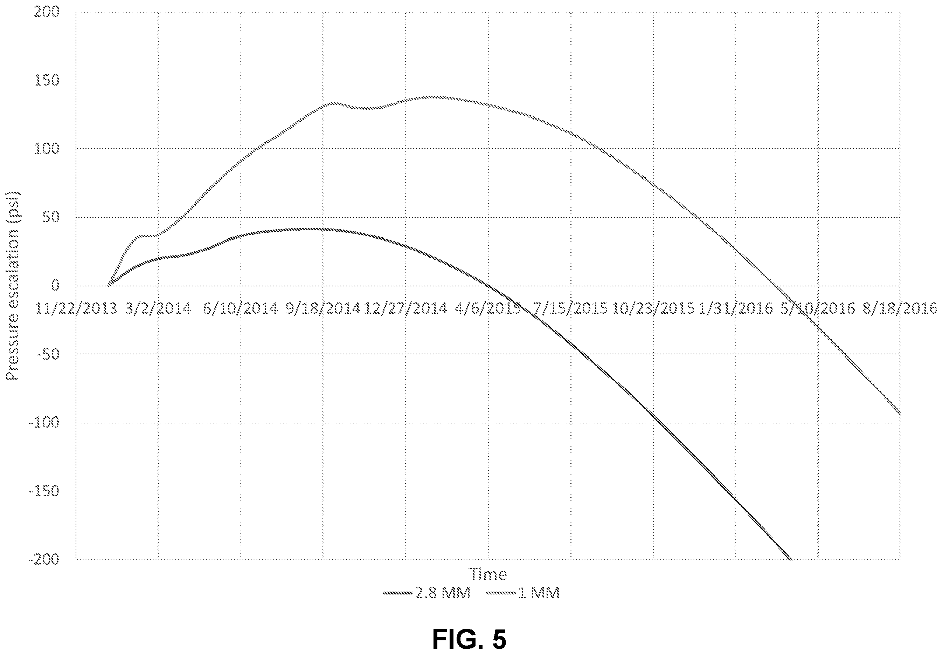

FIG. 5 shows how the Young's modulus can impact pressure. Referring to FIG. 5, one of the curves (193 GPa (2.8 MM psi)) corresponding to a relatively higher Young's modulus shows a more moderate pressure escalation and earlier pressure depletion. The second curve (1 MM) corresponding to a relatively lower Young's modulus shows a higher pressure escalation but the same rate of pressure depletion because the permeability remains the same.

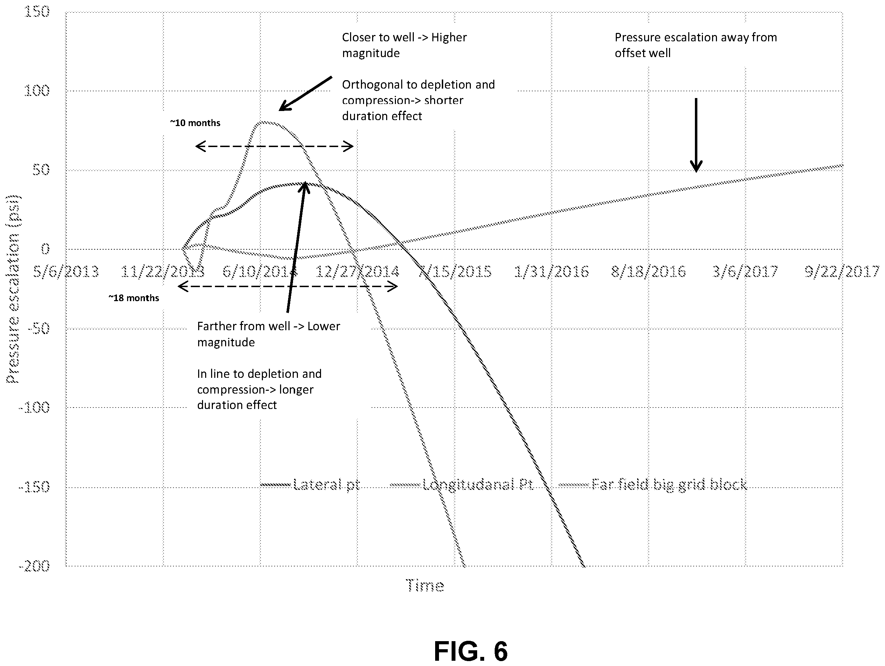

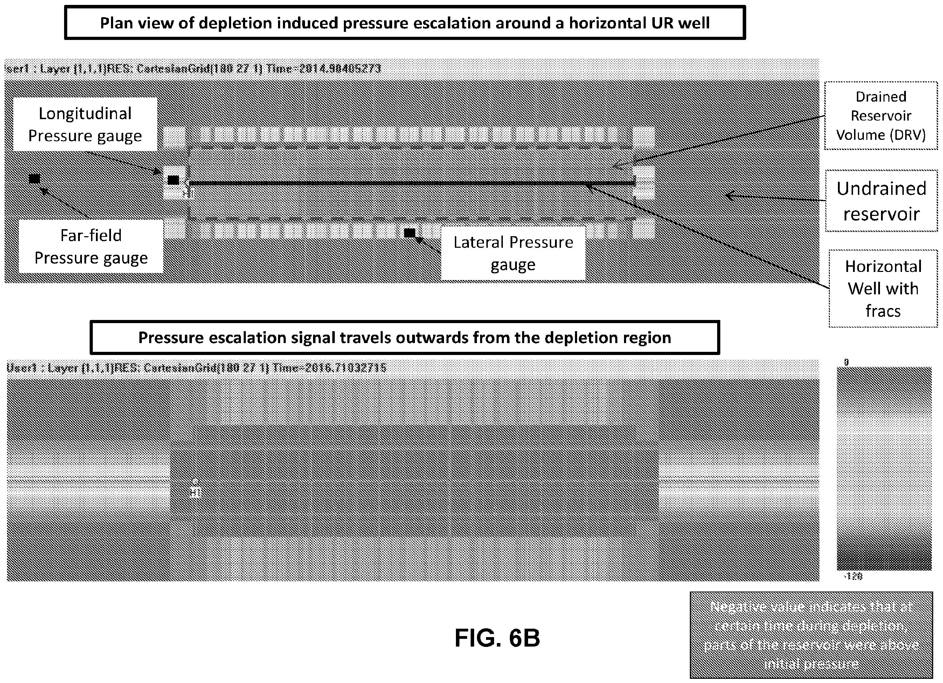

FIGS. 6 A and 6B show simulated results of pressure measurements over time for a reservoir having Km = 1.5 $\mu$D and YM = 193 GPa (2.8 MM psi). As shown, there are 3 curves (FIG. 6 A) that represent pressure escalation at three different points (FIG. 6B) adjacent to the producing well. The lateral point or the blue curve corresponds to a measurement orthogonal to the direction of the horizontal well. The longitudinal point or orange curve corresponds to measurement along the direction of the wellbore but outside its extent. The final curve in gray corresponds to a far field pressure measurement in the direction of the horizontal lateral further away from the well compared to the longitudinal point. Since it is farther away the pressure escalation signal takes more time to reach its peak value.

## Claims

1. A method of characterizing a hydrocarbon reservoir in a subterranean formation, the method comprising:

     a) measuring a poromechanic pressure change due to lithostatic load sharing using pressure gauges (X, Y, Z) installed in separate offset wells, different sections of a single well, or combinations of vertical and horizontal wells, or a combination of producing and monitoring wells;
     b) mapping the poromechanic pressure change to one or more locations of the pressure gauges (X, Y, Z) in the subterranean formation; and
     c) identifying one or more local pressure peaks in the poromechanic pressure change, wherein the one or more local pressure peaks are each marked by a pressure escalation and subsequent pressure depletion;

     **characterized in that** the method comprises:
     d) determining a drained reservoir volume in the hydrocarbon reservoir based on the pressure escalation wherein the drained reservoir volume is the portion of the total reservoir that is contacted by or adjacent to hydraulic fracture stimulation from a well.

2. The method of claim 1, wherein the drained reservoir volume is localized to or near an offset well.

3. The method of claim 2, further comprising:
   recovering hydrocarbon from the offset well.

**4.** The method of claim 1, further comprising:
determining a effective permeability and stiffness of the drained reservoir volume, DRV, based on an analysis of the pressure escalation.

**5.** The method of claim 1, further comprising:
determining extent of drainage from producing well based on analysis of pressure escalation in un-drained part of reservoir.

**6.** The method of claim 1, wherein the hydrocarbon reservoir has been stimulated via hydraulic fracturing.

**7.** The method of claim 4, further comprising: determining an optimal well spacing based on the DRV dimensions and effective permeability.

**8.** The method of claim 4, further comprising:
determining an optimal well stacking based on the DRV dimensions and effective permeability.

**9.** The method of claim 4, wherein the pressure escalation occurs outside the drainage volume of the producing well

**10.** The method of claim 1, further comprising:
determining un-stimulated rock permeability using pressure decay after escalation;

**11.** The method of claim 1, wherein the poromechanic pressure increase is at least partly due to Noordbergum effect.

**12.** The method of claim 1, further comprising:
generating a coupled reservoir geomechanics simulation inverse model to estimate DRV dimensions, effective stiffness and permeability based on known pressure escalation and duration.


**Patentansprüche**

**1.** Verfahren zum Charakterisieren eines Kohlenwasserstoffreservoirs in einer unterirdischen Formation, wobei das Verfahren Folgendes umfasst:

a) Messen einer poromechanischen Druckänderung aufgrund von lithostatischer Lastverteilung unter Verwendung von Druckprüfern (X, Y, Z), die in separaten versetzten Bohrlöchern, unterschiedlichen Bereichen eines einzelnen Bohrlochs, oder Kombinationen vertikaler und horizontaler Bohrlöcher, oder einer Kombination von Förder- und Prüfbohrlöchern installiert sind;
b) Zuweisen der poromechanischen Druckänderung zu einem oder mehreren Standorten der Druckprüfer (X, Y, Z) in der unterirdischen Formation; und
c) Identifizieren einer oder mehrerer lokaler Druckspitzen in der poromechanischen Druckänderung, wobei die eine oder mehreren lokalen Druckspitzen jeweils von einem Druckanstieg und nachfolgenden Druckabbau **gekennzeichnet sind;**

**dadurch** gekennzeichnet, dass das Verfahren Folgendes umfasst:
d) Ermitteln eines angezapften Reservoirvolumens in dem Kohlenstoffreservoir auf Basis des Druckanstiegs, wobei das angezapfte Reservoirvolumen der Abschnitt des Gesamtreservoirs ist, der in Kontakt mit hydraulischer Bruchstimulation durch ein Bohrloch steht oder daran angrenzt.

**2.** Verfahren nach Anspruch 1, wobei das angezapfte Reservoirvolumen bei oder nahe einem versetzten Bohrloch liegt.

**3.** Verfahren nach Anspruch 2, das weiter Folgendes umfasst:
Gewinnen von Kohlenwasserstoff aus dem versetzten Bohrloch.

**4.** Verfahren nach Anspruch 1, das weiter Folgendes umfasst:
Ermitteln einer effektiven Durchdringbarkeit und Steifigkeit des angezapften Reservoirvolumens, DRV, auf Basis einer Analyse des Druckanstiegs.

**5.** Verfahren nach Anspruch 1, das weiter Folgendes umfasst:

Ermitteln vom Ableitungsausmaß des Förderbohrlochs auf Basis von Analyse vom Druckanstieg in einem nicht angezapften Teil vom Reservoir.

6. Verfahren nach Anspruch 1, wobei das Kohlenwasserstoffreservoir mittels hydraulischer Frakturierung stimuliert wurde.

7. Verfahren nach Anspruch 4, das weiter Folgendes umfasst: Ermitteln eines optimalen Bohrlochabstands auf Basis der DRV-Dimensionen und effektiven Durchdringbarkeit.

8. Verfahren nach Anspruch 4, das weiter Folgendes umfasst:
Ermitteln eines optimalen Bohrloch-Stackings auf Basis der DRV-Dimensionen und effektiven Durchdringbarkeit.

9. Verfahren nach Anspruch 4, wobei der Druckanstieg außerhalb des Ableitungsvolumens des Förderbohrlochs stattfindet.

10. Verfahren nach Anspruch 1, das weiter Folgendes umfasst:
Ermitteln nicht-stimulierter Felsdurchdringbarkeit unter Verwendung von Druckabfall nach Anstieg.

11. Verfahren nach Anspruch 1, wobei der poromechanische Druckzuwachs zumindest teilweise aufgrund vom Noordbergum-Effekt geschieht.

12. Verfahren nach Anspruch 1, das weiter Folgendes umfasst:
Erzeugen eines Umkehrmodells zur Simulation verbundener Geomechanik, um DRV-Dimensionen, effektive Steifigkeit und Durchdringbarkeit auf Basis von bekanntem Druckanstieg und Dauer zu schätzen.

**Revendications**

1. Procédé de caractérisation d'un réservoir d'hydrocarbures dans une formation souterraine, le procédé comprenant :

   a) la mesure d'un changement de pression poromécanique en raison d'un partage de charges lithostatiques à l'aide de jauges de pression (X, Y, Z) installées dans des puits décalés séparés, des sections différentes d'un seul puits, ou des combinaisons de puits de production et de surveillance ;
   b) le mappage du changement de pression poromécanique vers un ou plusieurs emplacements des jauges de pression (X, Y, Z) dans la formation souterraine ; et
   c) l'identification d'un ou plusieurs pics de pression locaux dans le changement de pression poromécanique, dans lequel les un ou plusieurs pics de pression locaux sont chacun marqués par une augmentation de pression et une diminution de pression consécutive ;

   **caractérisé en ce que** le procédé comprend :
   d) la détermination d'un volume de réservoir drainé dans le réservoir d'hydrocarbures sur la base de l'augmentation de pression, dans lequel le volume de réservoir drainé est la partie du réservoir total qui est en mise en contact par ou adjacente à une stimulation de fracture hydraulique provenant d'un puits.

2. Procédé selon la revendication 1, dans lequel le volume de réservoir drainé est localisé au niveau ou près d'un puits décalé.

3. Procédé selon la revendication 2, comprenant en outre :
la récupération d'hydrocarbures à partir du puits décalé.

4. Procédé selon la revendication 1, comprenant en outre :
la détermination d'une perméabilité et d'une rigidité effectives du volume de réservoir drainé, DRV, sur la base d'une analyse de l'intensification de pression.

5. Procédé selon la revendication 1, comprenant en outre :
la détermination d'une étendue de drainage à partir du puits de production sur la base d'une analyse de l'augmentation de pression dans une partie non drainée de réservoir.

**6.** Procédé selon la revendication 1, dans lequel le réservoir d'hydrocarbures a été stimulé par fracturation hydraulique.

**7.** Procédé selon la revendication 4, comprenant en outre : la détermination d'un espacement de puits optimal sur la base des dimensions de DRV et de la perméabilité effective.

**8.** Procédé selon la revendication 4, comprenant en outre :
la détermination d'un empilement de puits optimal sur la base des dimensions de DRV et de la perméabilité effective.

**9.** Procédé selon la revendication 4, dans lequel l'augmentation de pression se produit à l'extérieur du volume de drainage du puits de production.

**10.** Procédé selon la revendication 1, comprenant en outre :
la détermination d'une perméabilité de roche non stimulée à l'aide d'une baisse de pression après l'augmentation.

**11.** Procédé selon la revendication 1, dans lequel l'augmentation de pression poromécanique est au moins partiellement due à un effet Noordbergum.

**12.** Procédé selon la revendication 1, comprenant en outre :
la génération d'un modèle inverse de simulation de géomécanique de réservoir couplé pour estimer des dimensions de DRV, une rigidité et une perméabilité effectives sur la base d'une augmentation et d'une durée de pression connues.

FIG. 1

FIG. 2

FIG. 3A

EP 3 658 750 B1

FIG. 3B

EP 3 658 750 B1

FIG. 4

FIG. 5

FIG. 6

EP 3 658 750 B1

**Plan view of depletion induced pressure escalation around a horizontal UR well**

iser1 : Layer [1,1,1]RES: CartesianGrid[180 27 1] Time=2014.98485273

Longitudinal Pressure gauge

Drained Reservoir Volume (DRV)

Undrained reservoir

Far-field Pressure gauge

Lateral Pressure gauge

Horizontal Well with fracs

**Pressure escalation signal travels outwards from the depletion region**

User1 : Layer [1,1,1]RES: CartesianGrid[180 27 1] Time=2016.71032715

Negative value indicates that at certain time during depletion, parts of the reservoir were above initial pressure

## FIG. 6B

EP 3 658 750 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009094064 A

### Non-patent literature cited in the description

- **ROUSSEL NICHOLAS P. et al.** Introduction to Poroelastic Response Analysis - Quantifying Hydraulic Fracture Geometry and SRV Permeability from Offset-Well Pressure Data. *Proceedings of the 5th Unconventional Resources Technology Conference,* 24 July 2017, 1-13